# FASCICULE DE BREVET EUROPEEN

(11) **EP 4 370 854 B1**
(45) Date de publication et mention de la délivrance du brevet: **27.08.2025**
(21) Numéro de dépôt: 22741521.3
(22) Date de dépôt: 12.07.2022
(51) Int. Cl.: F28D 9/00

(54) **PYLÔNE DE SUSPENSION D'UN MOTEUR D'AÉRONEF ÉQUIPÉ D'UN ÉCHANGEUR DE REFROIDISSEMENT À CONTRE-COURANT**
AUFHÄNGUNGSPYLON FÜR EIN FLUGZEUGTRIEBWERK MIT EINEM GEGENSTROM-KÜHLAUSTAUSCHER
AIRCRAFT ENGINE SUSPENSION PYLON PROVIDED WITH A COUNTERFLOW COOLING EXCHANGER

(30) Priorité: 16.07.2021 FR 2107724
(43) Date de publication de la demande: 22.05.2024
(73) Titulaire: Liebherr-Aerospace Toulouse SAS, 31200 Toulouse (FR)
(72) Inventeur: RICARD, Didier, 31016 TOULOUSE Cedex 2 (FR); BONNIVARD, Florian, 31016 TOULOUSE Cedex 2 (FR)
(74) Mandataire: Bringer IP
(86) Numéro de dépôt international: PCT/EP2022/069394
(87) Numéro de publication internationale: WO 2023/285426

(56) Documents cités:
- EP-A1- 3 594 586
- US-A- 5 729 969
- US-B2- 10 619 936

## Description

### Domaine technique de l'invention

L'invention concerne un pylône (ou mât) de suspension d'un moteur d'aéronef équipé d'un dispositif d'échange thermique, tel qu'un échangeur de refroidissement, destiné à équiper un système d'air d'un aéronef, tel qu'un système de conditionnement d'air. Un pylône tel que défini par le préambule de la revendication 1 est connu du document US 5,729,969.

### Arrière-plan technologique

Un système d'air d'un aéronef tel qu'un système de contrôle environnemental d'une cabine d'un aéronef, plus connu sous l'acronyme ECS pour la dénomination anglaise « *Environmental Control System* » est destiné à fournir à la cabine de l'aéronef (qui désigne de manière générale tout espace intérieur de l'aéronef dont la pression et/ou la température de l'air doit être contrôlée, tel qu'une cabine pour passagers, le cockpit de pilotage, une soute, etc.) un air à pression et/ou température contrôlées.

Pour cela, il est connu de prélever un air haute pression sur les moteurs propulsifs de l'aéronef et de traiter cet air (aussi désigné par la terminologie d'air *bleed*) par une pluralité d'équipements pour l'amener à une température et pression compatibles avec les besoins de la cabine.

Parmi ces équipements, on trouve au moins un échangeur thermique air/air de pré-refroidissement qui vise à refroidir l'air prélevé sur les moteurs propulsifs de l'aéronef par un flux d'air froid. Cet échangeur est souvent désigné par sa terminologie anglaise de *precooler.*

Un tel échangeur thermique comprend en général un circuit chaud et un circuit froid transverses configurés pour pouvoir assurer des échanges thermiques entre le flux d'air véhiculé par le circuit chaud (aussi désigné ci-après par la passe chaude) et le flux d'air froid véhiculé par le circuit froid (aussi désigné ci-après par la passe froide).

Il existe également des échangeurs dont les circuits chaud et froid sont à contre-courants, c'est-à-dire que les flux d'air chaud et froid suivent des directions parallèles inverses l'une de l'autre.

Quelle que soit la structure de l'échangeur, le circuit froid peut, par exemple, être alimenté par un flux d'air prélevé sur l'écoulement secondaire du moteur, connu sous la dénomination de fan air, dont la température est proche de l'environnement extérieur de l'aéronef, et qui peut donc atteindre en vol des températures de l'ordre de -50°C et une pression de l'ordre de 200 mbar.

Le circuit froid peut aussi être alimenté par un flux d'air prélevé sur une écope de l'aéronef qui alimente un canal d'air, plus connu sous la dénomination de RAM air.

Le circuit chaud peut être alimenté directement par l'air prélevé sur les moteurs propulsifs ou par un air issu des moteurs et déjà partiellement traité par un équipement en amont du système de conditionnement d'air.

La plupart des échangeurs thermiques aujourd'hui utilisés à bord des aéronefs sont formés d'une chambre d'échanges thermiques de forme généralement rectangulaire qui loge un empilement de plaques ou d'ailettes (aussi désignées par la terminologie de « faisceau » de plaques ou d'ailettes) qui forment des canaux de circulation empilés, alternativement pour la passe chaude et pour la passe froide. Ainsi, la passe chaude qui alimente une face de l'échangeur circule dans les canaux des différentes couches et la passe froide qui alimente une face de l'échangeur (perpendiculaire pour les échangeurs transverses et opposée pour les échangeurs à contre-courant) circule dans les canaux intercalés entre deux canaux de la passe chaude. Cette architecture permet d'intercaler chaque canal chaud entre deux canaux froids sur toute la longueur ou hauteur de l'échangeur et donc d'assurer des échanges thermiques entre les deux fluides.

Les demandes EP3521589 et EP3521590 au nom du demandeur décrivent des exemples de *precooler.*

Ces échangeurs thermiques permettent de refroidir l'air prélevé sur les moteurs ou l'air ambiant compressé par des compresseurs dédiés, avant d'être traité par les autres équipements du système de conditionnement d'air pour pouvoir alimenter la cabine de l'aéronef. La capacité de refroidissement d'un échangeur est directement proportionnelle à son encombrement.

Les inventeurs ont donc cherché une solution nouvelle permettant d'augmenter les surfaces d'échanges au sein d'un échangeur tout en limitant au maximum l'encombrement de l'échangeur, et cela en vue d'optimiser l'implantation de l'échangeur dans un pylône d'aéronef.

Les inventeurs ont notamment cherché à développer un pylône d'aéronef équipé d'un échangeur de chaleur qui puisse être utilisé, non seulement dans le cadre des systèmes de conditionnement d'air d'un véhicule de transport, tel qu'un aéronef, mais également dans tous types de systèmes de refroidissement nécessitant le refroidissement d'un fluide chaud issu d'une source de fluide chaud par un fluide froid issu d'une source de fluide froid.

### Objectifs de l'invention

L'invention vise à fournir un pylône d'aéronef équipé d'un échangeur de refroidissement (plus connu sous la dénomination anglaise de *precooler*) destiné à être utilisé dans un système d'air d'un aéronef.

L'invention vise plus particulièrement à fournir un pylône équipé d'un échangeur de refroidissement qui permet d'augmenter les surfaces d'échanges tout en limitant l'encombrement de l'échangeur.

L'invention vise aussi à fournir, dans au moins un mode de réalisation, un pylône équipé d'un échangeur de refroidissement qui permet d'optimiser son volume d'intégration dans le pylône.

L'invention vise aussi à fournir, dans au moins un mode de réalisation, un pylône équipé d'un échangeur de refroidissement qui peut être relié à diverses sources d'air chaud et froid selon les contraintes d'intégration.

### Exposé de l'invention

Pour ce faire, l'invention concerne un pylône de suspension d'un moteur propulsif d'un aéronef sous une aile d'un aéronef présentant un axe principal, caractérisé en ce qu'il comprend :
- un échangeur de refroidissement à contre-courant d'un flux d'air primaire chaud par un flux d'air secondaire froid circulant en sens inverse l'un de l'autre le long d'une direction, dite direction longitudinale, coïncidant avec ledit axe principal, ledit échangeur comprenant deux blocs échangeurs à plaques, dits faisceaux, juxtaposés l'un à côté de l'autre de part et d'autre d'un axe central de juxtaposition s'étendant le long de ladite direction longitudinale, et comprenant chacun :
   ∘ une pluralité de plaques parallèles longitudinales formant alternativement des canaux de circulation du flux d'air primaire chaud qui définissent une passe chaude du faisceau, et des canaux de circulation du flux d'air secondaire froid qui définissent une passe froide du faisceau,
   ∘ une entrée d'air chaud et une sortie d'air chaud agencées respectivement à chaque extrémité longitudinale dudit faisceau,
   ∘ une entrée d'air froid et une sortie d'air froid agencées respectivement à chaque extrémité longitudinale dudit faisceau,

   lesdites passes chaudes des deux faisceaux étant en communication de fluide avec une entrée centrale commune aux deux faisceaux formant lesdites entrées d'air chaud des deux faisceaux et avec une sortie centrale commune aux deux faisceaux formant lesdites sortie d'air chaud desdits faisceaux,
   et lesdites passes froides des deux faisceaux étant en communication de fluide avec des entrées latérales et sorties latérales disjointes qui s'écartent latéralement dudit axe central, ces entrées latérales disjointes étant alimentées par un air frais ambiant prélevé au voisinage dudit pylône,
- des conduites de distribution d'un air chaud adapté pour relier fluidiquement un dispositif de prélèvement d'air sur ledit moteur d'aéronef et ladite entrée centrale commune aux deux faisceaux.

Ainsi et contrairement à la plupart des échangeurs de refroidissement actuellement embarqués sur les aéronefs qui comprennent en général un circuit simple d'échange thermique (une passe chaude et une passe froide qui se croisent à 90° l'une de l'autre), l'échangeur du pylône selon l'invention comprend un circuit complexe d'échanges thermiques (deux passes chaudes et deux passes froides agencées à contre-courant les unes des autres).

L'échangeur de refroidissement du pylône selon l'invention présente la particularité de comprendre deux faisceaux adjacents juxtaposés et alimentés par une entrée commune et débouchant dans une sortie commune.

L'échangeur de refroidissement du pylône selon l'invention permet donc d'offrir une grande surface d'alimentation froide (l'échangeur étant alimenté en air froid par les entrées latérales) et une alimentation chaude centrale et commune.

L'échangeur du pylône selon l'invention optimise son volume d'intégration dans l'environnement moteur.

Selon l'invention, lesdites passes chaudes des deux faisceaux sont en communication de fluide avec ladite entrée commune et ladite sortie commune, et lesdites passes froides des deux faisceaux sont en communication de fluide avec les entrées latérales disjointes et les sorties latérales disjointes
En d'autres termes, lesdites passes chaudes des deux faisceaux sont alimentées par une entrée commune et débouchent dans une sortie commune, et lesdites passes froides des deux faisceaux sont alimentées par les entrées latérales disjointes et débouchent dans les sorties latérales disjointes.

Ainsi et selon l'invention, l'échangeur comprend une alimentation en air chaud commune aux deux faisceaux et deux alimentations latérales en air froid dédiées chacune à un faisceau. La passe chaude est donc scindée en deux, dans les deux faisceaux juxtaposés, et chaque faisceau assure un refroidissement par une passe froide dédiée. Cela permet un refroidissement important du flux d'air chaud alimentant l'échangeur.

Selon l'invention, la sortie de la passe chaude est également commune aux deux faisceaux et les sorties froides sont disjointes et dédiées chacune à un faisceau.

L'invention optimise l'intégration de l'échangeur au sein du pylône d'un aéronef en orientant l'échangeur de telle sorte que la direction longitudinale de l'échangeur (qui coïncide avec l'axe de juxtaposition) coïncide avec la direction principale du pylône (qui coïncide avec l'axe principal du moteur), les entrées d'air froid étant agencées vers l'avant de l'aéronef. De cette manière, les entrées latérales d'air froid peuvent être alimentées par l'air ambiant présent de part et d'autre du pylône et pénétrant dans le pylône par des prises d'air froid ménagées de part et d'autre du pylône en regard des entrées latérales de l'échangeur. Le déplacement de l'aéronef en vol conduit naturellement et spontanément la prise d'air froid de part et d'autre du pylône pour alimenter les passes froides de l'échangeur.

Avantageusement et selon l'invention, les passes froides et/ou chaudes des deux faisceaux sont séparées par une barre de fermeture centrale.

Selon cette variante, il y a une séparation des flux chaud et/ou froid entre les deux faisceaux dans la zone de circulation à contre-courant des flux d'air par la présence de barres de fermeture centrales.

Avantageusement et selon l'invention, chaque faisceau de l'échangeur est logé dans un carter comprenant à chaque extrémité longitudinale une paroi d'extrémité formée de deux plans ajourés inclinés par rapport à la direction longitudinale et reliés par une arête de jonction qui s'étend perpendiculairement à ladite direction longitudinale, chaque plan ajouré incliné formant une entrée latérale ou une sortie latérale d'une des passes dudit faisceau, et chaque paire de plans ajourés inclinés des deux faisceaux agencés en regard l'un de l'autre formant une entrée commune et/ou une sortie commune auxdits faisceaux.

L'échangeur selon cette structure particulière permet de manière simple et économique de former l'entrée centrale commune et la sortie centrale commune aux deux faisceaux adjacents par la combinaison de deux plans inclinés ajourés en regard l'un de l'autre. L'inclinaison par rapport à la direction longitudinale des plans inclinés formant l'entrée commune et/ou la sortie commune est de préférence comprise entre 0 et 90°, de préférence comprise entre 30 et 60°. Une conduite d'alimentation de l'entrée centrale commune et une conduite de collecte de la sortie centrale commune peuvent être montées respectivement sur l'entrée centrale commune et sur la sortie centrale commune pour assurer l'alimentation et la collecte des flux d'air correspondants, par exemple en venant s'appuyer sur les arêtes de jonction.

L'invention s'étend également à un système de refroidissement d'un flux d'air chaud par un flux d'air froid.

Le système de refroidissement selon l'invention comprend :
- au moins une source d'air chaud et au moins une source d'air froid,
- au moins un collecteur d'air chaud et au moins un collecteur d'air froid,
- un échangeur de refroidissement selon l'invention,
- un réseau de conduites de circulation d'air reliant au moins ladite source d'air chaud auxdites entrées d'air chaud dudit échangeur, au moins ladite source d'air froid auxdites entrées d'air froid dudit échangeur, au moins lesdites sorties d'air chaud dudit échangeur audit collecteur d'air chaud, au moins lesdites sorties d'air froid dudit échangeur audit collecteur d'air froid.

Avantageusement et selon l'invention, chaque conduite de circulation est équipée d'au moins une vanne de régulation du flux d'air circulant dans la conduite.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en coupe d'un échangeur de refroidissement d'un pylône selon une première variante de réalisation de l'invention,
[Fig. 2] est une vue schématique en perspective d'un échangeur de refroidissement d'un pylône selon un mode de réalisation de l'invention permettant d'appréhender la forme globale de l'échangeur,
[Fig. 3] est une vue schématique d'un pylône de suspension d'un moteur d'aéronef selon un mode de réalisation de l'invention équipé de l'échangeur de la figure 1.

### Description détaillée d'un mode de réalisation de l'invention

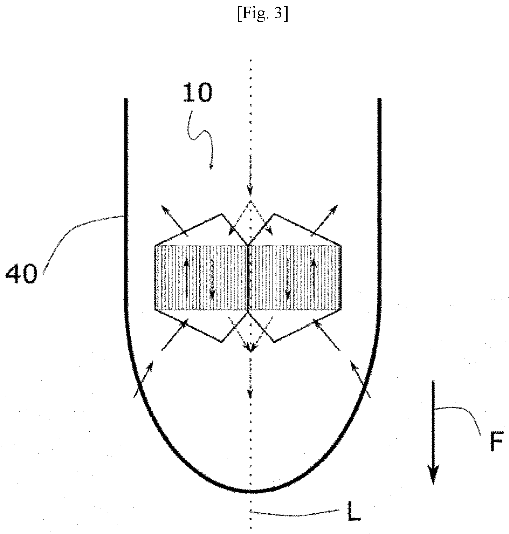

Sur les figures, les échelles et les proportions ne sont pas strictement respectées et ce, à des fins d'illustration et de clarté. Dans toute la description détaillée qui suit en référence aux figures, sauf indication contraire, chaque élément de l'échangeur est décrit tel qu'il est agencé lorsque l'échangeur est agencé au sein d'un pylône de suspension d'un moteur d'aéronef. Cette configuration est notamment représentée par la figure 3.

En outre, les éléments identiques, similaires ou analogues sont désignés par les mêmes références dans toutes les figures.

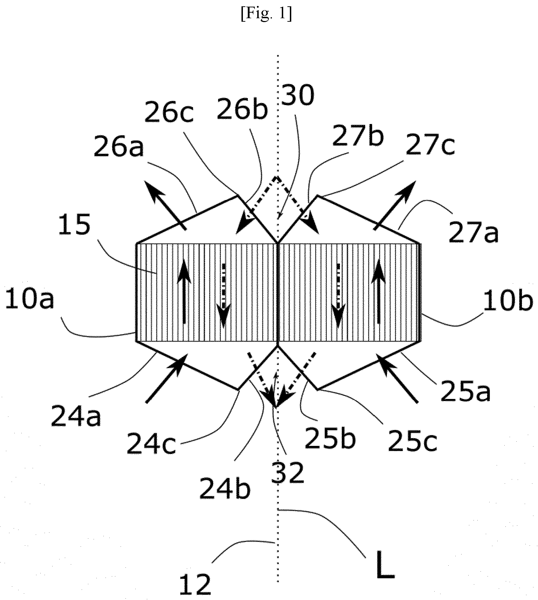

La figure 1 illustre en coupe longitudinale un échangeur 10 selon un mode de réalisation de l'invention qui comprend deux faisceaux 10a, 10b juxtaposés l'un à côté de l'autre, de part et d'autre d'un axe central 12 de juxtaposition qui s'étend le long de de la direction longitudinale L.

Dans le mode de réalisation des figures, les deux faisceaux sont séparés par une barre de fermeture.

Chaque faisceau 10a, 10b comprend une pluralité de plaques 15 qui s'étendent chacune le long de la direction longitudinale. Ces plaques 15 sont par exemple des plaques métalliques qui sont brasées sur une armature externe pour les maintenir selon un arrangement parallélépipédique.

Ces plaques 15 délimitent, deux à deux, des canaux de circulation des flux d'air qui forment eux-mêmes les passes chaude et froide à contre-courant du faisceau.

Le faisceau 10a est logé dans un carter qui comprend, à une première extrémité longitudinale, une paroi d'extrémité formée de deux plans ajourés inclinés 24a, 24b et, à une seconde extrémité longitudinale opposée, une paroi d'extrémité formée de deux plans ajourés inclinés 26a, 26b. Les plans 24a et 24b sont reliés l'un à l'autre par une arête 24c de jonction qui s'étend perpendiculairement à la direction longitudinale L. Les plans 26a et 26b sont reliés l'un à l'autre par une arête 26c de jonction qui s'étend perpendiculairement à la direction longitudinale L et parallèlement à l'arête 24c.

Le faisceau 10b adjacent est logé dans un carter qui comprend à une première extrémité longitudinale une paroi d'extrémité formée de deux plans ajourés inclinés 25a, 25b et à une seconde extrémité longitudinale opposée une paroi d'extrémité formée de deux plans ajourés inclinés 27a, 27b. Les plans 25a et 25b sont reliés l'un à l'autre par une arête 25c de jonction qui s'étend perpendiculairement à la direction longitudinale L. Les plans 27a et 27b sont reliés l'un à l'autre par une arête 27c de jonction qui s'étend perpendiculairement à la direction longitudinale L et parallèlement à l'arête 25c.

Les plans ajourés inclinés 24a, 25a, 26a et 27a forment chacun une entrée latérale ou une sortie latérale d'une des passes (chaude ou froide) du faisceau.

Les plans ajourés inclinés 26b et 27b des deux faisceaux agencés en regard l'un de l'autre forment une entrée commune ou une sortie commune des faisceaux et les plans ajourés inclinés 24b, 25b de agencés à l'autre extrémité longitudinale forment une entrée commune ou une sortie commune conjuguée.

Dans toutes les figures, les flèches en traits pleins représentent la direction principale de circulation du flux d'air froid au sein (et au voisinage) de l'échangeur et les flèches en pointillés représentent la direction principale de circulation du flux d'air chaud au sein (et au voisinage) de l'échangeur.

Sur la figure 1, les passes chaudes des deux faisceaux 10a, 10b sont en communication de fluide avec l'entrée commune 30 formée, par les parois 26b et 27b et la sortie commune 32 formée, par les parois 24b et 25b.

Les passes froides des deux faisceaux sont en communication de fluide avec les entrées latérales disjointes formées, par les plans ajourés 24a et 25a et les sorties latérales disjointes formées, par les plans ajourés 26a et 27a.

En d'autres termes, les passes chaudes des deux faisceaux 10a, 10b sont alimentées par l'entrée commune 30 et débouchent dans la sortie commune 32, et les passes froides des deux faisceaux 10a, 10b sont alimentées par les entrées latérales disjointes 24a, 25a et débouchent dans les sorties latérales disjointes 26a, 27a.

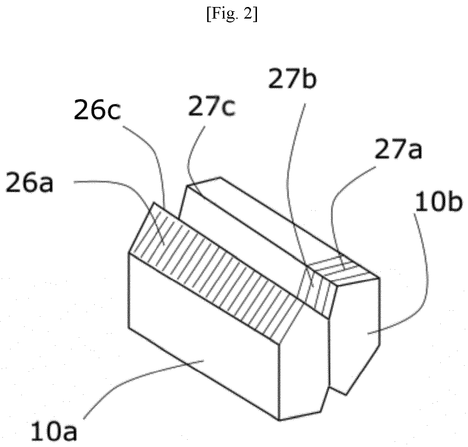

La figure 2 illustre schématiquement en perspective un échangeur d'un pylône selon un mode de réalisation de l'invention permettant d'appréhender la forme générale de l'échangeur. Sur cette vue, on peut également observer certaines des parois ajourées formant les entrées et/ou sorties.

La figure 3 illustre de manière schématique un pylône 40 selon un mode de réalisation de l'invention comprenant l'échangeur de la figure 1. Cet échangeur peut être fixé dans le pylône par tous moyens à la portée immédiate de la personne du métier.

Le pylône loge l'échangeur 10 de telle sorte que la direction longitudinale L de l'échangeur coïncide avec la direction principale du pylône (qui coïncide avec l'axe principal du moteur et la direction principale de déplacement de l'aéronef).

Les entrées d'air froid formées par les parois 24a et 25a sont agencées vers l'avant de l'aéronef. De cette manière, les entrées latérales d'air froid peuvent être alimentées par l'air ambiant présent de part et d'autre du pylône 40, lorsque l'aéronef se déplace suivant la direction de la flèche référencée F sur la figure 3.

Des prises d'air agencées de part et d'autre du pylône 40 permettent de fournir l'air des passes froides de l'échangeur 10 et ainsi d'assurer le refroidissement de l'air chaud conduit vers l'échangeur 10 par des conduites appropriées depuis une source d'air chaud, qui est par exemple un air prélevé sur le moteur propulsif (non représenté sur la figure 3) portée par le pylône 40.

## Revendications

1. Pylône de suspension (40) d'un moteur propulsif d'un aéronef sous une aile d'un aéronef présentant un axe principal, **caractérisé en ce qu'**il comprend :
- un échangeur de refroidissement (10) à contre-courant d'un flux d'air primaire chaud (22) par un flux d'air secondaire froid (24) circulant en sens inverse l'un de l'autre le long d'une direction, dite direction longitudinale (L), coïncidant avec ledit axe principal dudit moteur, ledit échangeur comprenant deux blocs échangeurs à plaques, dits faisceaux (10a, 10b), juxtaposés l'un à côté de l'autre de part et d'autre d'un axe central (12) de juxtaposition s'étendant le long de ladite direction longitudinale (L), et comprenant chacun :
∘ une pluralité de plaques parallèles longitudinales (15) formant alternativement des canaux de circulation du flux d'air primaire chaud qui définissent une passe chaude du faisceau, et des canaux de circulation du flux d'air secondaire froid qui définissent une passe froide du faisceau,
∘ une entrée d'air chaud et une sortie d'air chaud agencées respectivement à chaque extrémité longitudinale dudit faisceau,
∘ une entrée d'air froid et une sortie d'air froid agencées respectivement à chaque extrémité longitudinale dudit faisceau,
lesdites passes chaudes des deux faisceaux étant en communication de fluide avec une entrée centrale commune (30) aux deux faisceaux formant lesdites entrées d'air chaud des deux faisceaux et une sortie centrale commune (32) aux deux faisceaux (10a, 10b) formant lesdites sortie d'air chaud desdits faisceaux,
et lesdites passes froides des deux faisceaux étant en communication de fluide avec des entrées latérales et sorties latérales disjointes qui s'écartent latéralement dudit axe central (12), lesdites entrées latérales disjointes étant alimentées par un air frais ambiant prélevé au voisinage dudit pylône,
- des conduites de distribution d'un air chaud adapté pour relier fluidiquement un dispositif de prélèvement d'air sur ledit moteur d'aéronef et ladite entrée centrale commune aux deux faisceaux.

2. Pylône selon la revendication 1, **caractérisé en ce que** lesdites passes froides et/ou chaudes des deux faisceaux dudit échangeur sont séparées par une barre de fermeture (38) centrale.

3. Pylône selon l'une des revendications 1 ou 2, **caractérisé en ce que** chaque faisceau (10a, 10b) dudit échangeur est logé dans un carter comprenant à chaque extrémité longitudinale une paroi d'extrémité formée de deux plans ajourés inclinés (24a, 24b ; 25a, 25b ; 26a, 26b ; 27a, 27b) par rapport à la direction longitudinale (L) et reliés par une arête (24c, 25c, 26c, 27c) de jonction qui s'étend perpendiculairement à ladite direction longitudinale (L), chaque plan ajouré incliné (24a, 25a, 26a, 27a) formant une entrée latérale ou une sortie latérale d'une des passes dudit faisceau, et chaque paire de plans ajourés inclinés (24b, 25b ; 26b, 27b) des deux faisceaux agencés en regard l'un de l'autre formant une entrée commune (30 ; 32) et/ou une sortie commune (30 ; 32) desdits faisceaux.

## Patentansprüche

1. Aufhängungsmast (40) für ein Triebwerk eines Luftfahrzeugs unter einem Flügel eines Luftfahrzeugs mit einer Hauptachse, **dadurch gekennzeichnet, dass** dieser umfasst:
- einen Gegenstrom-Kühlungstauscher (10) eines warmen Primärluftstroms (22) durch einen kalten Sekundärluftstrom (24), die in einer als Längsrichtung (L) bezeichneten Richtung, die mit der Hauptachse des Triebwerks zusammenfällt, entgegengesetzt zueinander strömen, worin der Tauscher zwei als Bündel (10a, 10b) bezeichnete Plattentauscherblöcke umfasst, die beiderseits einer sich in der Längsrichtung (L) erstreckenden zentralen Nebeneinanderstellungsachse (12) nebeneinander angeordnet sind und jeweils umfassen:
∘ mehrere parallele Längsplatten (15), die abwechselnd Strömungskanäle für den Strom der warmen Primärluft, die einen warmen Durchgang des Bündels definieren, und Strömungskanäle für den Strom der kalten Sekundärluft, die einen kalten Durchgang des Bündels definieren, bilden,
∘ einen Warmlufteinlass und einen Warmluftauslass, die an jedem Längsende des Bündels entsprechend angeordnet sind,
∘ einen Kaltlufteinlass und einen Kaltluftauslass, die an jedem Längsende des Bündels entsprechend angeordnet sind,
worin die warmen Durchgänge der beiden Bündel in Fluidverbindung mit einem den beiden Bündeln gemeinsamen zentralen Einlass (30), der die Warmlufteinlässe der beiden Bündel bildet, und einem den beiden Bündeln (10a, 10b) gemeinsamen zentralen Auslass (32) stehen, der die Warmluftauslässe der Bündel bildet,
und worin die kalten Durchgänge der beiden Bündel in Fluidverbindung mit getrennten seitlichen Einlässen und seitlichen Auslässen stehen, die seitlich von der Mittelachse (12) abweichen, und die getrennten seitlichen Einlässe durch frische Umgebungsluft versorgt werden, die aus der Nähe des Masts abgezogen wird,
- Leitungen zur Verteilung von Warmluft, die geeignet sind, eine Vorrichtung zum Ansaugen von Luft aus dem Flugzeugtriebwerk und den, den beiden Bündeln gemeinsamen, zentralen Einlass strömungsmäßig zu verbinden.

2. Mast nach Anspruch 1, **dadurch gekennzeichnet, dass** die kalten und/oder warmen Durchgänge der beiden Bündel des Tauschers durch eine zentrale Verschlussleiste (38) getrennt sind.

3. Mast nach einem der Ansprüche 1 oder 2, **dadurch gekennzeichnet, dass** jedes Bündel (10a, 10b) des Tauschers in einem Gehäuse untergebracht ist, das an jedem Längsende eine Endwand aufweist, die aus zwei durchbrochenen Ebenen (24a, 24b; 25a, 25b; 26a, 26b; 27a, 27b) gebildet ist, die in Bezug auf die Längsrichtung (L) geneigt und durch eine Verbindungskante (24c, 25c, 26c, 27c) verbunden sind, die sich senkrecht zu der Längsrichtung (L) erstreckt, worin jede geneigte durchbrochene Ebene (24a, 25a, 26a, 27a) einen seitlichen Einlass oder einen seitlichen Auslass eines der Durchgänge des Bündels bildet und jedes Paar von geneigten durchbrochenen Ebenen (24b, 25b; 26b, 27b) der beiden Bündel, die einander gegenüber angeordnet sind, einen den Bündeln gemeinsamen Einlass (30; 32) und/oder einen den Bündeln gemeinsamen Auslass (30; 32) bilden.

## Claims

1. Suspension pylon (40) for a propulsion engine of an aircraft under a wing of an aircraft having a main axis, **characterized in that** it comprises:
- a counterflow cooling exchanger (10) of a flow of hot primary air (22) by a flow of cold secondary air (24) flowing oppositely to each other in a direction, referred to as the longitudinal direction (L), coinciding with said main axis of said engine, said exchanger comprising two plate exchanger blocks, referred to as bundles (10a, 10b), juxtaposed one beside the other on both sides of a central juxtaposition axis (12) extending in said longitudinal direction (L), and each comprising:
∘ a plurality of parallel longitudinal plates (15) forming in alternation flow ducts for the flow of hot primary air, which define a hot pass of the bundle, and flow ducts for the flow of cold secondary air, which define a cold pass of the bundle,
∘ a hot air inlet and a hot air outlet arranged respectively at each longitudinal end of said bundle,
∘ a cold air inlet and a cold air outlet arranged respectively at each longitudinal end of said bundle,
said hot passes of the two bundles being in fluid communication with a central inlet (30) common to the two bundles forming said hot air inlets of the two bundles and a central outlet (32) common to the two bundles (10a, 10b) forming said hot air outlets of said bundles,
and said cold passes of the two bundles being in fluid communication with separate side inlets and side outlets which diverge laterally from said central axis (12), said separate side inlets being supplied by fresh ambient air drawn from the proximity of said pylon,
- conduits for distribution of hot air suitable for fluidly connecting a device for drawing air from said aircraft engine and said central inlet common to the two bundles.

2. Pylon as claimed in claim 1, **characterized in that** said cold and/or hot passes of the two bundles of said exchanger are separated by a central closure bar (38).

3. Pylon as claimed in any one of claims 1 or 2, **characterized in that** each bundle (10a, 10b) of said exchanger is housed in a housing comprising, at each longitudinal end, an end wall formed from two openwork planes (24a, 24b; 25a, 25b; 26a, 26b; 27a, 27b) inclined with respect to the longitudinal direction (L) and connected by a joint edge (24c, 25c, 26c, 27c) which extends perpendicularly to said longitudinal direction (L), each inclined openwork plane (24a, 25a, 26a, 27a) forming a side inlet or a side outlet of one of the passes of said bundle, and each pair of inclined openwork planes (24b, 25b; 26b, 27b) of the two bundles arranged facing each other forming an inlet (30; 32) common to said bundles and/or an outlet (30; 32) common to said bundles.
